# EUROPÄISCHE PATENTSCHRIFT

(11) **EP 3 313 645 B1**
(45) Veröffentlichungstag und Bekanntmachung des Hinweises auf die Patenterteilung: **02.10.2019**
(21) Anmeldenummer: 16729833.0
(22) Anmeldetag: 07.06.2016
(51) Int. Cl.: B29C 65/08, B65B 51/16, B65B 51/22, B65B 7/18, B29L 31/00

(54) **VORRICHTUNG ZUR BEARBEITUNG, INSBESONDERE ZUR ULTRASCHALLVERSCHWEISSUNG, VON PACKUNGSMÄNTELN SOWIE VERWENDUNG DER VORRICHTUNG**
DEVICE FOR THE PROCESSING, IN PARTICULAR FOR THE ULTRASONIC WELDING, OF PACKAGING CASINGS AND USE OF THE DEVICE
DISPOSITIF DE TRAITEMENT, EN PARTICULIER DE SOUDAGE AUX ULTRASONS, D'ENVELOPPES D'EMBALLAGE ET UTILISATION DU DISPOSITIF

(30) Priorität: 29.06.2015 DE 102015110387
(43) Veröffentlichungstag der Anmeldung: 02.05.2018
(73) Patentinhaber: SIG Technology AG, 8212 Neuhausen (CH)
(72) Erfinder: SCHAAF, Michael, 52134 Herzogenrath (DE)
(74) Vertreter: Cohausz & Florack
(86) Internationale Anmeldenummer: PCT/EP2016/062832
(87) Internationale Veröffentlichungsnummer: WO 2017/001153

(56) Entgegenhaltungen:
- WO-A1-2006/074031
- DE-B3- 10 231 742
- US-A- 3 294 616
- US-A- 3 863 826

## Beschreibung

Die Erfindung betrifft eine Vorrichtung zur Bearbeitung, insbesondere zur Ultraschallverschweißung, von Packungsmänteln und/oder Verpackungen, umfassend: wenigstens zwei Werkzeuge zur Bearbeitung, insbesondere zur Ultraschallverschweißung von Packungsmänteln, wobei jedes Werkzeug einen Wirkbereich aufweist, wobei die Werkzeuge derart gelagert sind, dass zwischen den Wirkbereichen ein Spalt entsteht, dessen Längsrichtung der Transportrichtung der Packungsmäntel entspricht, und wobei die Werkzeuge derart gelagert sind, dass die Größe des Spaltes veränderbar ist.

Die Erfindung betrifft zudem die Verwendung einer derartigen Vorrichtung zur Bearbeitung, insbesondere zur Verschweißung, von Packungsmänteln und/oder Verpackungen für Nahrungsmittel.

Verpackungen können auf unterschiedliche Weisen und aus verschiedensten Materialien hergestellt werden. Eine weit verbreitete Möglichkeit ihrer Herstellung besteht darin, aus dem Verpackungsmaterial einen Zuschnitt herzustellen, aus dem durch Falten und weitere Schritte zunächst ein Packungsmantel und schließlich eine Verpackung entsteht. Diese Herstellungsart hat unter anderem den Vorteil, dass die Zuschnitte sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff und/oder Metall, insbesondere Aluminium. Derartige Verpackungen finden insbesondere in der Lebensmittelindustrie große Verbreitung.

Auf dem Gebiet der Verpackungstechnik sind zahlreiche Vorrichtungen und Verfahren bekannt, mit denen flach zusammengefaltete Packungsmäntel aufgefaltet, einseitig verschlossen, mit Inhalten befüllt und anschließend vollständig verschlossen werden können.

Eine besondere Herausforderung stellt das Verschließen der Packungsmäntel dar, weil durch das Verschließen eine zuverlässige Abdichtung der Packungsmäntel erreicht werden muss, die auch dem anschließenden Transport und anderen Belastungen standhalten muss. Eine Möglichkeit des Verschließens von Packungsmänteln besteht darin, die Nähte des Packungsmantels zu verschweißen. Dies kann beispielsweise durch Ultraschall-Schweißverfahren erfolgen. Hierzu werden häufig zwei gegenläufig rotierende Werkzeuge - eine Sonotrode und ein Amboss - derart angeordnet, dass zwischen den etwa zylindrischen Wirkbereichen dieser Werkzeuge ein schmaler Spalt entsteht. Die Packungsmäntel können nun mit ihrem zu verschweißenden Bereich durch diesen Spalt geführt werden.

Der Schweißvorgang erfolgt, indem die Sonotrode ihre Ultraschallschwingungen auf den zu verschweißenden Bereich des Packungsmantels überträgt. Hierzu ist eine von Aufbau und Stärke des zu verschweißenden Materials sowie den Kontaktzonen an Amboss und Sonotrode und der eingestellten Frequenz abhängige, bestimmte Anpresskraft erforderlich, die beispielsweise dadurch erreicht wird, dass die Breite des Spaltes enger eingestellt wird als die Materialstärke der zu verschweißenden Bereiche der Packungsmäntel. Die auf diese Weise in den Packungsmantel eingebrachte Energie führt zu einer Aufschmelzung und Verklebung ("Verschweißung") der inneren Materiallage, bei der es sich häufig um eine Lage aus thermoplastischem Kunststoff handelt.

Vorrichtungen und Verfahren zum Ultraschallschweißen dünner Materialien sind beispielsweise aus der EP 1455 957 A1, der WO 2008/037256 A2, der EP 2 416 940 A1 und der DE 10 2013 100 474 A1 bekannt. Eine Vorrichtung nach dem Oberbegriff des Anspruchs 1 ist aus der US 3 272 682 bekannt.

Die dort beschriebenen Ultraschallschweißverfahren haben aufgrund der rotierenden Werkzeuge den Vorteil, dass eine kontinuierliche Verschweißung erfolgen kann. Das zu verschweißenden Material kann also unterbrechungsfrei durch die Ultraschallschweißanlage geführt werden. Zudem kann bei vielen der bekannten Vorrichtungen die Spaltbreite zwischen den Werkzeugen aktiv - also durch den Benutzer der Anlage - verstellt werden und somit an die Stärke der zu verschweißenden Materialien angepasst werden.

Ein Nachteil der bekannten Vorrichtungen und Verfahren liegt jedoch darin, dass eine passive - also durch das zu verschweißende Material ausgelöste - Anpassung der Spaltbreite während des Schweißvorgangs gar nicht oder nur in unbefriedigender Weise möglich ist. Eine Veränderung der Spaltbreite während des Schweißvorgangs kann beispielsweise notwendig sein, wenn mehrere zu verschweißende Materialien nicht nahtlos aneinander gereiht, sondern voneinander beabstandet durch den Spalt geführt werden. Dies kann beispielsweise bei Packungsmänteln der Fall sein, die von einem Transportband fortbewegt werden. Eine Veränderung der Spaltbreite kann auch notwendig sein, wenn sich die Materialstärke der zu verschweißenden Materialen ändert. Auch dies kann bei Packungsmänteln auftreten, beispielsweise in dem Bereich von überlappenden Materiallagen.

Vor diesem Hintergrund liegt der Erfindung die Aufgabe zugrunde, eine eingangs beschriebene und zuvor näher erläuterte Vorrichtung derart auszugestalten und weiterzubilden, dass eine Bearbeitung, insbesondere eine kontinuierliche Verschweißung von Packungsmänteln auch bei wechselnder Materialstärke zuverlässig möglich ist.

Diese Aufgabe wird durch die im Anspruch 1 angegebene Merkmalskombination gelöst.

Eine erfindungsgemäße Vorrichtung zur Bearbeitung, insbesondere zur Ultraschallverschweißung, von Packungsmänteln und/oder Verpackungen zeichnet sich zunächst durch wenigstens zwei Werkzeuge aus, die zur Bearbeitung, insbesondere zur Ultraschallverschweißung von Packungsmänteln dienen. Indem zwei oder mehr Werkzeuge vorgesehen sind, können die Packungsmäntel gleichzeitig von mehreren Seiten bearbeitet werden, ohne hierzu gewendet werden zu müssen. Jedes Werkzeug weist einen Wirkbereich auf, worunter derjenige Bereich verstanden wird, der auf die Packungsmäntel und/oder Verpackungen einwirkt. Die Einwirkung der Wirkbereiche auf den Packungsmantel kann berührungslos (z.B. durch Strahlung) oder berührend (z.B. durch Druck) erfolgen. Die Werkzeuge sind derart gelagert, dass zwischen den Wirkbereichen ein Spalt entsteht, dessen Längsrichtung der Transportrichtung der Packungsmäntel entspricht. Indem die Richtung des Spaltes auf die Transportrichtung der Packungsmäntel abgestimmt ist, können die Packungsmäntel von den Werkzeugen behandelt werden, ohne hierfür ihre Bewegungsrichtung verändern zu müssen. Da die Werkzeuge beidseitig eines Spaltes und somit gegenüberliegend angeordnet sind, können zudem beide Seiten der Packungsmäntel gleichzeitig behandelt werden. Die Werkzeuge sind derart gelagert, dass die Größe des Spaltes veränderbar ist. Hiermit kann insbesondere eine "aktive" - also durch den Benutzer der Vorrichtung veranlasste - Verstellung des Spaltes gemeint sein. Diese Verstellung erfolgt üblicherweise bei Stillstand der Vorrichtung, beispielsweise bei einem Wechsel des zu verarbeitenden Materials. Die Spaltbreite liegt im unbelasteten Zustand der Parallelfeder vorzugsweise im Bereich zwischen 0,1 mm und 1,5 mm, insbesondere zwischen 0,2 mm und 0,8 mm.

Die erfindungsgemäße Vorrichtung zeichnet sich durch wenigstens eine Parallelfeder aus, an der wenigstens eines der Werkzeuge quer zur Transportrichtung der Packungsmäntel beweglich gelagert ist. Eine Parallelfeder erlaubt eine federnde Lagerung, die eine Parallelverschiebung des gelagerten Bauteils (hier: des Werkzeugs) erlaubt. Eine Parallelverschiebung hat den Vorteil, dass das gelagerte Werkzeug nicht gekippt oder geneigt wird, was die Funktion des Werkzeugs beeinträchtigen könnte. Eine Parallelverschiebung wird durch zwei parallel angeordnete Blattfedern erreicht, die bei Belastung gebogen werden. Durch diese Lagerung wird eine "passive" - also eine durch das zu bearbeitende Material veranlasste - Anpassung bzw. Verstellung des Spaltes erreicht. Dies ist vergleichbar mit dem Fahrwerk eines Kraftfahrzeugs, bei dem die Räder gegenüber der Karosserie federnd gelagert sind, um Unebenheiten der Straße ausgleichen zu können. Das an der Parallelfeder gelagerte Werkzeug kann also Unebenheiten des zu bearbeitenden Materials "ausweichen". Besondere Vorteile hat eine derartige Lagerung bei Werkzeugen, die mit dem zu bearbeitenden Material unmittelbar in Kontakt stehen, beispielsweise auf dem Material abrollen. Dies ist beispielsweise bei Ultraschall-Schweißanlagen der Fall, bei denen zwei gegenläufig rotierende Werkzeuge (Sonotrode / Amboss) eingesetzt werden, die beidseitig auf dem zu verschweißenden Material abrollen. Ein Vorteil der federnden Lagerung liegt bei diesem Einsatzgebiet darin, dass auch Materialien mit sich verändernder Stärke zuverlässig verschweißt werden können, beispielsweise Packungsmäntel mit einer Nahtstelle. Der Federweg der Parallelfeder kann durch einen Anschlag mechanisch begrenzt werden. Dies hat den Vorteil, dass die an der Parallelfeder gelagerten Werkzeuge nicht aneinander stoßen können und somit geschont werden. Alternativ hierzu können auch Rollen, Bänder, Seile, Riemen, Führungsleisten, Pressleisten, Ketten oder Schwingungsdämpfer als Werkzeuge an einer Parallelfeder gelagert werden.

Nach der erfindungsgemäßen Ausgestaltung der Vorrichtung ist vorgesehen, dass die Parallelfeder wenigstens zwei parallel zueinander angeordnete Blattfedern umfasst. Eine Realisierung der Parallelfeder durch Biegefedern, insbesondere durch Blattfedern, zeichnet sich durch einen konstruktiv einfachen und sehr robusten Aufbau aus. Zudem haben Blattfedern und daraus gebildete Parallelfedern hygienische Vorteile, da sie sich aufgrund ihrer geometrisch einfachen Form leicht reinigen lassen und ohne Schmiermittel betrieben werden können. Blattfedern können daher auch unter hygienisch anspruchsvollen Bedingungen eingesetzt werden, beispielsweise bei der sterilen Bearbeitung von Nahrungsmittelverpackungen. Ein weiterer Vorteil von Blattfedern liegt in ihrer vergleichsweise geringen Masse. Dies hat eine geringe Trägheit zur Folge, so dass die Parallelfeder sehr spontan ausgelenkt werden kann.

Vorzugsweise sind die Blattfedern aus Metall, insbesondere aus Stahl wie etwa Federstahl oder Edelstahl hergestellt, wobei Edelstähle den hohen hygienischen Anforderungen besonders gut gerecht werden. Zum Einsatz kommen können beispielsweise auch einfachere Edelstahlsorten wie nach Werkstoffnummer 1.4301. Die Wandstärke der Blattfedern kann abhängig von ihren sonstigen Abmessungen und den geforderten Federwegen variieren. Sie kann beispielsweise im Bereich zwischen 0,6 mm und 4,5 mm und vorzugsweise zwischen 0,9 mm und 1,5 mm liegen.

Zu dieser Ausgestaltung wird weiter vorgeschlagen, dass die Blattfedern der Parallelfeder durch wenigstens zwei Distanzelemente voneinander beabstandet sind. Durch die Distanzelemente kann ein konstanter Abstand zwischen den Blattfedern eingestellt werden und somit ein etwa paralleler Verlauf der Blattfedern erreicht werden. Zudem wird durch die Distanzelemente erreicht, dass beim Einfedern oder Ausfedern - anders als bei einem geschichteten "Federpaket" - keine Reibung zwischen den benachbarten Blattfedern entsteht. Vorzugsweise weist jede Parallelfeder zwei Distanzelemente auf, die im Bereich der beiden Enden der Blattfedern angeordnet sind. Dabei ist es zur Beachtung von hygienischen Vorteilen und zur Erfüllung von aseptischen Anforderungen besonders vorteilhaft, wenn die Parallelfederanordnung aus einem einzigen Stück hergestellt ist. Das bedeutet, dass Blattfedern und Distanzelemente aus einem einzigen Bauteil bestehen. Dies hat den besonderen Vorteil, dass keine Kapillare zwischen den sonst einzelnen Teilen ausgebildet werden können und damit die Gefahr von sich bildenden Keimanlagerungen eliminiert wird.

In weiterer Ausgestaltung der Lagerung ist vorgesehen, dass die Parallelfeder in Querrichtung des Spaltes eine Steifigkeit im Bereich zwischen 0,5 N/mm und 350 N/mm, insbesondere zwischen 4,0 N/mm und 100 N/mm, ganz insbesondere zwischen 5,0 N/mm und 45 N/mm aufweist. Bei einer Lagerung eines Werkzeugs an mehreren Parallelfedern kann sich - je nach Verknüpfung der Parallelfedern - die Steifigkeit einer einzelnen Parallelfeder von der resultierenden Gesamtsteifigkeit unterscheiden. In diesem Fall soll die Steifigkeit der einzelnen Parallelfedern in dem angegebenen Bereich liegen. Federsteifigkeiten in diesem Bereich haben sich insbesondere bei der Bearbeitung von Packungsmänteln aus Verbundmaterial als guter Kompromiss zwischen einer zu weichen Lagerung (Nachteil: zu geringer Anpressdruck) und einer zu harten Lagerung (Nachteil: zu schlechter Ausgleich von Schwankungen der Materialstärke) erwiesen. Die Kennlinie der Parallelfeder kann linear, progressiv oder degressiv verlaufen. Der gewünschte Verlauf und die daraus resultierende Gestaltung der Parallelfedern hängen stark vom Aufbau des zu verschweißenden Materials (Laminat der Packungsmäntel bzw. der Verpackung) und der zu verarbeitenden Geometrie (Lagensprung) ab. Im Normalfall kann man mit einem linearen Verlauf der Kennlinie der Parallelfeder gute (Siegel-)Ergebnisse erzielen. Abhängig von der Kompressibilität und dem Anschmelzverhalten der Siegelschicht des Materials (Laminat der Packungsmäntel bzw. der Verpackung) kann jedoch auch eine progressive oder eine degressive Kennlinie der Parallelfeder gewünscht sein, wobei eine Siegelschicht, die im Verarbeitungstemperaturfenster bereits relativ hoch viskoses Verhalten aufweist, mit einer Parallelfeder mit einer eher progressiv gestalteten Kennlinie bearbeitet werden sollte, während für ein entsprechend niedrig viskoses Verhalten eher eine Gestaltung mit einer degressiven Kennlinie verwendet werden sollte.

Eine weitere Ausbildung der Vorrichtung sieht vor, dass wenigstens eines der Werkzeuge an zwei oder mehr Parallelfedern gelagert ist. Die Lagerung an mehreren Parallelfedern hat den Vorteil, dass auch Werkzeuge mit größerer Masse an den Parallelfedern gelagert werden können, ohne dass hierzu die einzelne Parallelfeder angepasst werden muss.

Zu dieser Ausbildung wird weiter vorgeschlagen, dass die Parallelfedern durch eine Brücke miteinander verbunden sind. Durch eine starre Verbindung der Parallelfedern mit einer Brücke kann erreicht werden, dass die auf das Werkzeug einwirkende Kraft auf mehrere parallelgeschaltete Parallelfedern verteilt wird. Auf diese Weise kann der Vorteil einer Parallelfeder, sich bei Belastungen ausschließlich zu biegen und nicht zu tordieren, auch bei einer Anordnung von mehreren parallelgeschalteten Parallelfedern erhalten bleiben. Dabei erscheinen Anordnungen von 2 bis 20, insbesondere von 4 bis 8 Parallelfedern besonders sinnvoll. Dies hat den Vorteil, dass das an den Parallelfedern gelagerte Werkzeug eine reine Parallelverschiebung vollzieht und keine gekippte oder geneigte Stellung einnimmt und somit besonders präzise positioniert werden kann. Es kann ebenfalls bevorzugt sein, mehrere Parallelfedern in Reihe zu schalten. Auch kann es bevorzugt sein, Reihen- und Parallelschaltungen von Parallelfedern miteinander zu kombinieren. Auf diese Weise kann dem gewünschten Auslenkungsverhalten des Werkzeugs besonders gut entsprochen werden, wobei der Vorteil der Parallelfedern, sich bei Belastungen ausschließlich zu biegen und nicht zu tordieren, auch bei entsprechender Verbindung über eine oder mehrere Brücken erhalten bleibt. Vorzugsweise ist das Werkzeug an der Brücke befestigt, so dass die Brücke zudem die Funktion eines Adapters übernimmt, mit dem unterschiedlich geformte Werkzeuge an den Parallelfedern gelagert werden können. Es kann vorgesehen sein, dass die Brücke gleichzeitig die Funktion der Distanzelemente zwischen den Blattfedern übernimmt, wodurch auf separate Distanzelemente verzichtet werden kann.

Nach einer weiteren Ausgestaltung der Vorrichtung ist vorgesehen, dass die Parallelfedern in vertikaler Richtung verlaufen. Alternativ hierzu kann vorgesehen sein, dass die Parallelfedern in horizontaler Richtung verlaufen. Unter einem vertikalen Verlauf kann ein Verlauf in Hochrichtung des Spaltes verstanden werden und unter einem horizontalen Verlauf kann ein Verlauf in Längsrichtung des Spaltes (also in Transportrichtung) verstanden werden. In beiden Fällen kann vorgesehen sein, dass die Parallelfeder an beiden Enden eingespannt oder beweglich geführt ist. In diesem Fall wird das Werkzeug vorzugsweise im mittleren Bereich zwischen den beiden Enden an der Parallelfeder gelagert. Alternativ hierzu kann in beiden Fällen vorgesehen sein, dass die Parallelfeder nur an einem Ende eingespannt oder beweglich geführt ist und das andere Ende ein freies Ende ist. In diesem Fall wird das Werkzeug vorzugsweise im Bereich des freien Endes an der Parallelfeder gelagert. Durch die sich so ergebenden verschiedenen Anordnungsvarianten ist es besonders gut möglich, eine weitgehend "momentenfreie" Lagerung der Werkzeuge umzusetzen.

Erfindungsgemäß ist vorgesehen, dass eines der Werkzeuge eine Sonotrode ist. Die Sonotrode, insbesondere der Wirkbereich der Sonotrode, ist drehbar gelagert. Derartige Sonotroden werden auch als "Rollsonotroden" bezeichnet und haben den Vorteil, dass sie auf den zu verschweißenden Materialien abrollen können und somit eine kontinuierliche Verschweißung von sich fortbewegenden Materialien leisten können. Zu dieser Ausbildung wird weiter vorgeschlagen, dass die Sonotrode an der Parallelfeder gelagert ist. Die Lagerung der Sonotrode an einer Parallelfeder hat den Vorteil, dass die Sonotrode bei einer Änderung der Materialstärke zurückfedern kann ohne hierbei gekippt oder geneigt zu werden. Die Drehachse der Sonotrode verläuft also in jeder Stellung etwa vertikal; sie wird lediglich parallel verschoben. Dies hat den Vorteil, dass die Lage und Form der Schweißnaht auch bei zurückgefederter Sonotrode unverändert bleibt. So bleiben auch hier weiterhin die den Spalt bildenden Wandabschnitte der Werkzeuge stets parallel zueinander, während sich lediglich die Spaltbreite ändert.

Eines der Werkzeuge ist ein Amboss. Der Amboss, insbesondere der Wirkbereich des Amboss, ist drehbar gelagert. Derartige Ambosse werden auch als "Rollambosse" bezeichnet und haben den Vorteil, dass sie auf den zu verschweißenden Materialien abrollen können und somit eine kontinuierliche Verschweißung von sich fortbewegenden Materialien leisten können. Zu dieser Ausbildung wird weiter vorgeschlagen, dass der Amboss an der Parallelfeder gelagert ist. Die Lagerung des Amboss an einer Parallelfeder hat den Vorteil, dass der Amboss bei einer Änderung der Materialstärke zurückfedern kann ohne hierbei gekippt oder geneigt zu werden. Die Drehachse des Amboss verläuft also in jeder Stellung etwa vertikal; sie wird lediglich parallel verschoben. Dies hat den Vorteil, dass die Lage und Form der Schweißnaht auch bei zurückgefedertem Amboss unverändert bleibt.

Erfindungsgemäß ist vorgesehen, dass die Sonotrode und der Amboss Drehachsen aufweisen, die parallel zueinander angeordnet sind. Durch die parallele Anordnung der Drehachsen können auch mit geometrisch einfach geformten Wirkflächen, beispielsweise zylindrischen Wirkflächen, zuverlässige Schweißnähte erzeugt werden. Zudem vereinfachen parallele Drehachsen den Antrieb der Sonotrode und des Amboss über Zahnräder oder Riemen.

Die Vorrichtung ist ergänzt durch ein Transportband mit Zellen zur Aufnahme der Packungsmäntel. Durch ein Transportband bzw. einen Transportriemen können hohe Zugkräfte übertragen werden, die es erlauben, eine Vielzahl von Packungsmänteln in konstanten Abständen zueinander zu transportieren. Die Zellen dienen der Aufnahme der Packungsmäntel. Die Packungsmäntel können sowohl durch eine formschlüssige Verbindung als auch durch eine kraftschlüssige Verbindung in den Zellen gehalten werden.

Die zuvor beschriebene Vorrichtung eignet sich in allen dargestellten Ausgestaltungen besonders gut für eine Verwendung zur Bearbeitung, insbesondere zur Verschweißung, von Verpackungen für Nahrungsmittel. Dies liegt insbesondere daran, dass die bei der Vorrichtung eingesetzten Parallelfedern hygienische Vorteile haben. Denn sie lassen sich aufgrund ihrer geometrisch einfachen Form leicht reinigen und können ohne Schmiermittel betrieben werden. Parallelfedern können daher auch unter hygienisch anspruchsvollen Bedingungen eingesetzt werden, beispielsweise bei der sterilen Bearbeitung von Lebensmittelverpackungen.

Die Erfindung wird nachfolgend anhand einer lediglich ein bevorzugtes Ausführungsbeispiel darstellenden Zeichnung näher erläutert. In der Zeichnung zeigen:
- Fig. 1A:: einen aus dem Stand der Technik bekannten Zuschnitt zum Falten eines Packungs mantels,
- Fig. 1B:: einen aus dem Stand der Technik bekannten Packungsmantel, der aus dem in Fig. 1A gezeigten Zuschnitt gebildet ist, im flach gefalteten Zustand,
- Fig. 1C:: den Packungsmantel aus Fig. 1B im aufgefalteten Zustand,
- Fig. 1D:: den Packungsmantel aus Fig. 1C mit vorgefalteten Boden- und Giebelflächen,
- Fig. 1E:: den Packungsmantel aus Fig. 1C nach dem Verschweißen,
- Fig. 1F:: den Packungsmantel aus Fig. 1E in einer Draufsicht,
- Fig. 2:: eine erfindungsgemäße Vorrichtung zur Ultraschallverschweißung von Packungsmänteln in einer Draufsicht,
- Fig. 3:: die Vorrichtung aus Fig. 2 in einer Seitenansicht entlang der Schnittebene III-III aus Fig. 2, und
- Fig. 4:: die Vorrichtung aus Fig. 2 in einer Vorderansicht entlang der Schnittebene IV-IV aus Fig. 3.

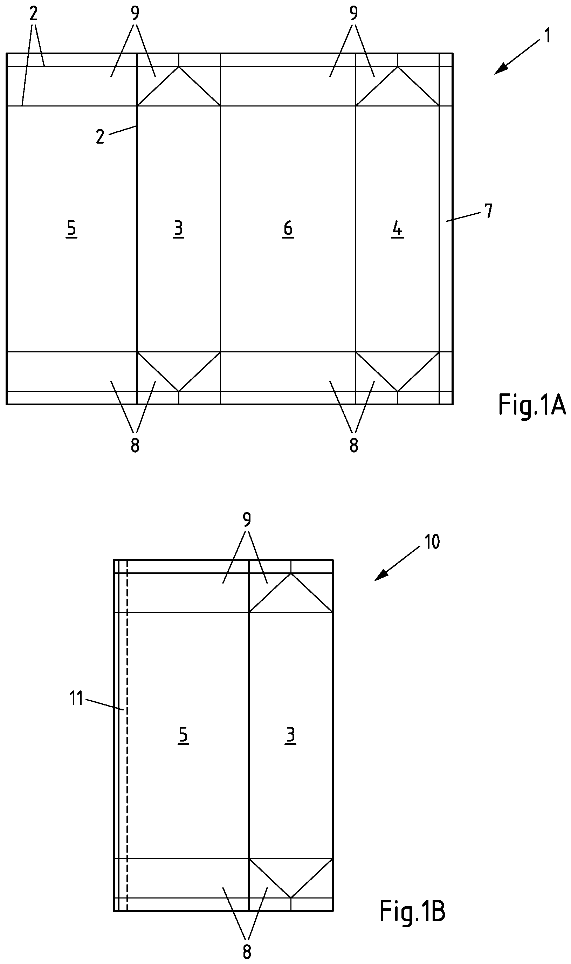

In Fig. 1A ist ein aus dem Stand der Technik bekannter Zuschnitt 1 dargestellt, aus dem ein Packungsmantel gebildet werden kann. Der Zuschnitt 1 kann mehrere Lagen unterschiedlicher Materialien umfassen, beispielsweise Papier, Pappe, Kunststoff oder Metall, insbesondere Aluminium. Der Zuschnitt 1 weist mehrere Faltlinien 2 auf, die das Falten des Zuschnitts 1 erleichtern sollen und den Zuschnitt 1 in mehrere Flächen aufteilen. Der Zuschnitt 1 kann in eine erste Seitenfläche 3, eine zweite Seitenfläche 4, eine vordere Fläche 5, eine hintere Fläche 6, eine Siegelfläche 7, Bodenflächen 8 und Giebelflächen 9 unterteilt werden. Aus dem Zuschnitt 1 kann ein Packungsmantel gebildet werden, indem der Zuschnitt 1 derart gefaltet wird, dass die Siegelfläche 7 mit der vorderen Fläche 5 verbunden, insbesondere verschweißt 5 werden kann.

Fig. 1B zeigt einen aus dem Stand der Technik bekannten Packungsmantel 10 im flach gefalteten Zustand. Die bereits im Zusammenhang mit Fig. 1A beschriebenen Bereiche des Packungsmantels sind in Fig. 1B mit entsprechenden Bezugszeichen versehen. Der Packungsmantel 10 ist aus dem in Fig. 1A gezeigten Zuschnitt 1 gebildet. Hierzu wurde der Zuschnitt 1 derart gefaltet, dass die Siegelfläche 7 und die vordere Fläche 5 überlappend angeordnet sind, so dass die beiden Flächen miteinander flächig verschweißt werden können. Als Ergebnis entsteht eine Längsnaht 11. In Fig. 1B ist der Packungsmantel 10 in einem flach zusammengefalteten Zustand dargestellt. In diesem Zustand liegt eine Seitenfläche 4 (in Fig. 1B verdeckt) unter der vorderen Fläche 5 während die andere Seitenfläche 3 auf der hinteren Fläche 6 (in Fig. 1B verdeckt) liegt. In dem flach zusammengefalteten Zustand können mehrere Packungsmäntel 10 besonders platzsparend gestapelt werden. Daher werden die Packungsmäntel 10 häufig an dem Ort der Herstellung gestapelt und stapelweise zu dem Ort der Befüllung transportiert. Erst dort werden die Packungsmäntel 10 abgestapelt und aufgefaltet, um mit Inhalten, beispielsweise mit Nahrungsmitteln, befüllt werden zu können.

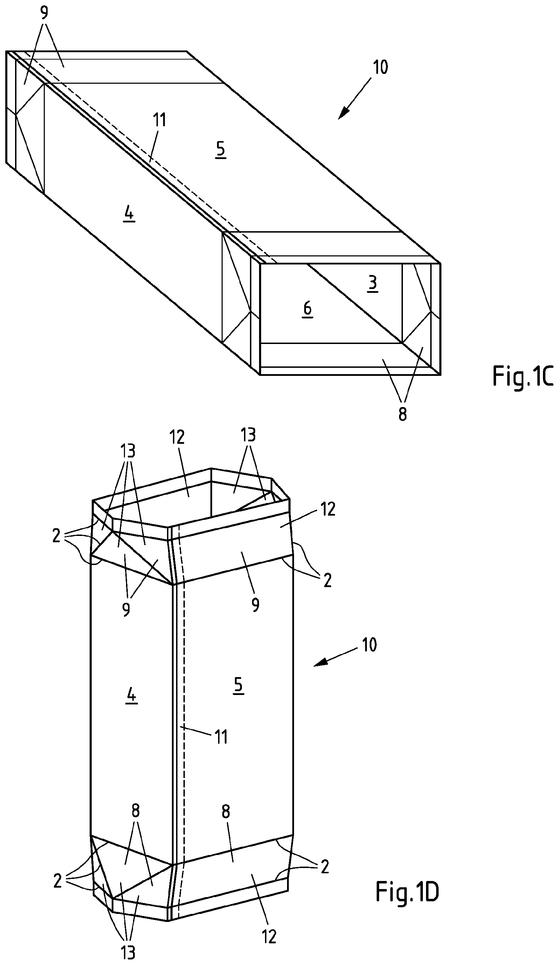

In Fig. 1C ist der Packungsmantel 10 aus Fig. 1B im aufgefalteten Zustand dargestellt. Auch hier sind die bereits im Zusammenhang mit Fig. 1A oder Fig. 1B beschriebenen Bereiche des Packungsmantels 10 mit entsprechenden Bezugszeichen versehen. Unter dem aufgefalteten Zustand wird eine Konfiguration verstanden, bei der sich zwischen den beiden jeweils benachbarten Flächen 3, 4, 5, 6 ein Winkel von etwa 90° ausbildet, so dass der Packungsmantel 10 - je nach der Form dieser Flächen - einen quadratischen oder rechteckigen Querschnitt aufweist. Dem entsprechend sind die gegenüberliegenden Seitenflächen 3, 4 parallel zueinander angeordnet. Das Gleiche gilt für die vordere Fläche 5 und die hintere Fläche 6.

Fig. 1D zeigt den Packungsmantel 10 aus Fig. 1C im vorgefalteten Zustand, also in einem Zustand, in dem die Faltlinien 2 sowohl im Bereich der Bodenflächen 8 als auch im Bereich der Giebelflächen 9 vorgefaltet worden sind. Diejenigen Bereiche der Bodenflächen 8 und der Giebelflächen 9, die an die vordere Fläche 5 und an die hintere Fläche 6 angrenzen, werden auch als Rechtecksflächen 12 bezeichnet. Die Rechtecksflächen 12 werden bei der Vorfaltung nach innen gefaltet und bilden später den Boden bzw. den Giebel der Verpackung. Diejenigen Bereiche der Bodenflächen 8 und der Giebelflächen 9, die an die Seitenflächen 3, 4 angrenzen, werden hingegen als Dreiecksflächen 13 bezeichnet. Die Dreiecksflächen 13 werden bei der Vorfaltung nach außen gefaltet und bilden abstehende Bereiche aus überschüssigem Material, die auch als "Ohren" 14 bezeichnet werden und in einem späteren Herstellungsschritt - etwa durch Klebverfahren - an die Verpackung angelegt werden.

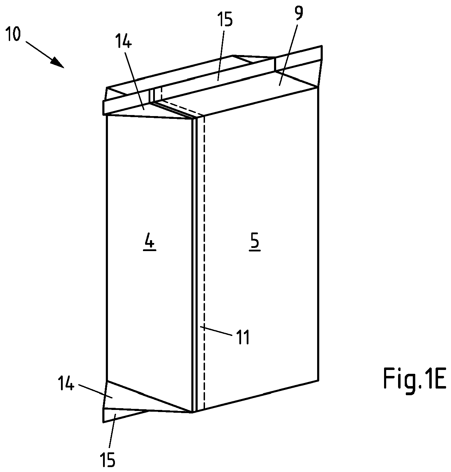

In Fig. 1E ist der Packungsmantel 10 aus Fig. 1D nach dem Verschweißen, also im befüllten und verschlossenen Zustand gezeigt. Im Bereich der Bodenflächen 8 und im Bereich der Giebelflächen 9 entsteht nach dem Verschließen eine Flossennaht 15. In Fig. 1E stehen die Ohren 14 und die Flossennaht 15 ab. Sowohl die Ohren 14 als auch die Flossennaht 15 werden in einem späteren Herstellungsschritt, etwa durch Klebverfahren, angelegt.

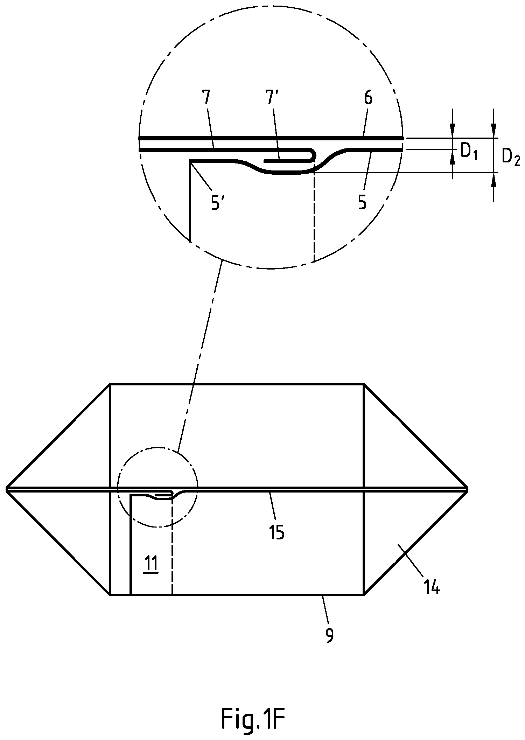

Fig. 1F zeigt den Packungsmantel 10 aus Fig. 1E in einer Draufsicht. Fig. 1F enthält zudem eine vergrößerte Ansicht des Bereiches der Längsnaht 11. In der dargestellten Perspektive ist erkennbar, dass die Flossennaht 15 des Packungsmantels 10 im Bereich der Längsnaht 11 eine Dicke D₂ aufweist, die größer ist als die Dicke D₁ im übrigen Bereich der Flossennaht 15. Dies liegt daran, dass der Endbereich 5' der vorderen Fläche 5 und der Endbereich 7' der Siegelfläche 7 im Bereich der Längsnaht 11 eine Überlappung bilden. Im Bereich der Längsnaht 11 weist die Flossennaht 15 also einen wenigstens dreilagigen anstelle eines zweilagigen Aufbaus auf. Die Dicke D₁ der Flossennaht 15 liegt beispielsweise im Bereich zwischen 0,8 mm und 1,0 mm, während die vergrößerte Dicke D₂ der Flossennaht 15 beispielsweise im Bereich zwischen 1,2 mm und 1,5 mm liegt. Der Übergang zwischen den Unterschiedlichen Dicken wird auch als "Lagensprung" bezeichnet. Zusätzlich zu der Überlappung kann ein oder beide Endbereiche 5', 7' umgefaltet sein. Eine Umfaltung des innen liegenden Endbereiches (in Fig. 1F: Endbereich 7') hat den Vorteil, dass nur die innerste Lage des Materials des Zuschnitts 1 mit dem Inhalt der Verpackung in Kontakt kommen kann. Dies hat zur Folge, dass andere Lagen des Materials des Zuschnitts 1, beispielsweise eine mittlere Lage aus Pappe, von dem Inhalt der Verpackung getrennt sind. Auf diese Weise werden sowohl die Dichtigkeit der Verpackung als auch hygienische Anforderungen sichergestellt. Eine vollständige Umfaltung des innen liegenden Endbereiches 7' würde jedoch zu einer weiteren Vergrößerung der Dicke der Flossennaht 15 führen. Es kann daher vorgesehen sein, dass nur einige Lagen des Endbereiches 7', insbesondere die innerste Lage des Endbereiches 7' umgefaltet werden. Hierzu werden die übrigen Lagen vor der Umfaltung abgetrennt bzw. abgeschält.

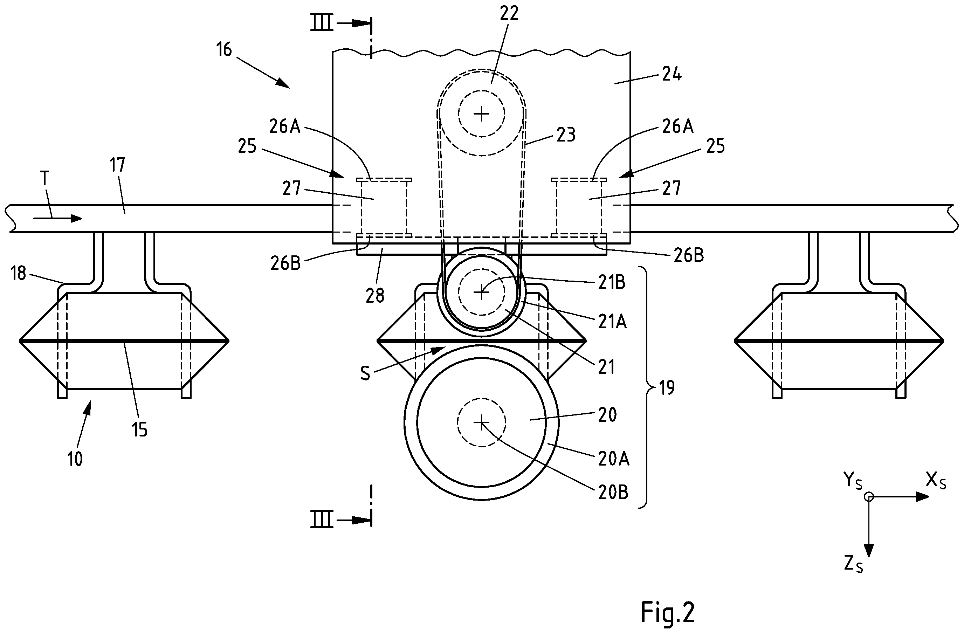

Fig.2 zeigt eine erfindungsgemäße Vorrichtung 16 zur Ultraschallverschweißung von Packungsmänteln 10 in einer Draufsicht. Dargestellt ist zudem ein Transportband 17 mit Zellen 18, in denen die Packungsmäntel 10 zunächst zu der Vorrichtung 16 geführt werden und nach dem Verschweißen weiter transportiert werden. Die Transportrichtung T der Packungsmäntel 10 verläuft daher parallel zum Transportband 17. Die Vorrichtung 16 umfasst zwei Werkzeuge 19 zur Ultraschallverschweißung der Packungsmäntel 10, wobei bei der in Fig. 2 dargestellten und insoweit bevorzugten Vorrichtung 16 das eine Werkzeug eine Sonotrode 20 und das andere Werkzeug ein Amboss 21 ist. Es können jedoch auch andere - in Fig. 2 nicht dargestellte - Werkzeuge 19 eingesetzt werden. Die Sonotrode 20 weist einen Wirkbereich 20A mit einer runden Querschnittsfläche auf und der Amboss 21 weist einen runden Wirkbereich 21A mit einer ebenfalls runden Querschnittsfläche auf.

Die Sonotrode 20 und der Amboss 21 sind derart gelagert, dass zwischen den Wirkbereichen 20A, 21A ein Spalt S entsteht, dessen Längsrichtung X_{S} der Transportrichtung T der Packungsmäntel 10 entspricht. Der Spalt S weist zudem eine Hochrichtung Y_{S} und eine Querrichtung Z_{S} auf, die senkrecht zueinander und senkrecht zu der Längsrichtung X_{S} des Spaltes S verlaufen (siehe Koordinatensystem in Fig. 2). Die Sonotrode 20 ist drehbar um eine Drehachse 20B gelagert und der Amboss 21 ist drehbar um eine Drehachse 21B gelagert. Die beiden Drehachsen 20B, 21B sind parallel zueinander angeordnet und verlaufen in Hochrichtung Y_{S} des Spaltes S (also "vertikal"). Die Sonotrode 20 weist einen internen (und daher in Fig. 2 nicht sichtbaren) Antrieb auf, während der Amboss 21 einen externen Antrieb 22 aufweist, der den Amboss 21 über einen Riemen 23 antreibt.

Bei der in Fig. 2 dargestellten Vorrichtung 16 werden die Packungsmäntel 10 mit ihrer abstehenden Flossennaht 15 in Transportrichtung T durch den Spalt S geführt, wobei die Wirkbereiche 20A, 21A die zu verschweißenden Bereiche der Packungsmäntel 10 (hier: die Flossennaht 15) berühren und miteinander verschweißen. Um trotz der unterschiedlichen Dicken D₁, D₂ der Flossennaht 15 eine gleichmäßige Anpresskraft und somit eine zuverlässige Verschweißung zu erreichen, ist der Amboss 21 derart an einer Grundplatte 24 gelagert, dass die Größe des Spaltes S in Querrichtung Zs veränderbar ist. Die Lagerung des Amboss 21 erfolgt bei der in Fig. 2 beispielhaft dargestellten Vorrichtung 16 durch zwei Parallelfedern 25, die jeweils zwei parallel zueinander angeordnete Blattfedern 26A, 26B umfassen. Die Blattfedern 26A, 26B der beiden Parallelfedern 25 verlaufen in vertikaler Richtung und sind jeweils durch zwei Distanzelemente 27 voneinander beabstandet. Die beiden Parallelfedern 25 sind über eine Brücke 28 miteinander verbunden, an der der Amboss 21 befestigt ist. Durch die gefederte Lagerung des Amboss 21 kann der Amboss 21 je nach Dicke der Flossennaht 15 ausfedern (Vergrößerung des Spaltes S) oder einfedern (Verkleinerung des Spaltes S), so dass der Wirkbereich 21A des Amboss 21 mit einer möglichst konstanten Anpresskraft auf die Flossennaht 15 einwirkt.

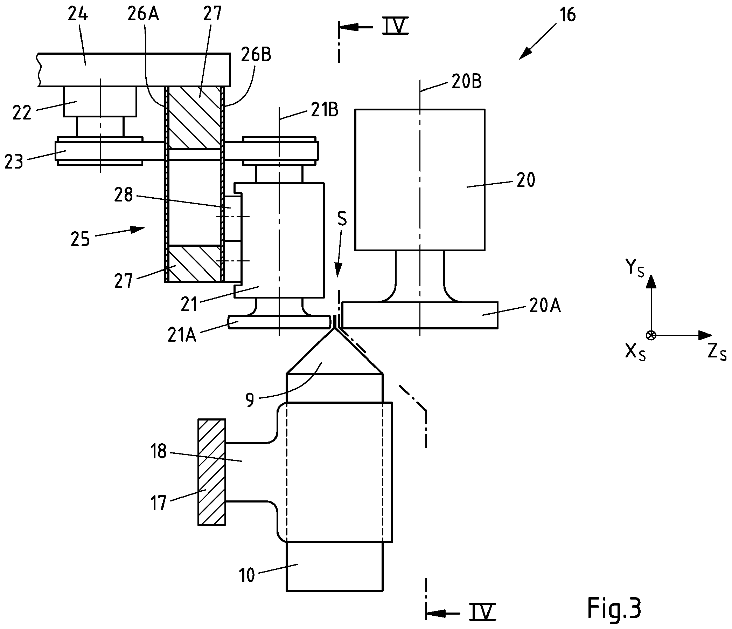

In Fig. 3 ist die Vorrichtung 16 aus Fig. 2 in einer Seitenansicht entlang der Schnittebene III-III aus Fig. 2 dargestellt. Für diejenigen Bereiche der Vorrichtung 16, die bereits im Zusammenhang mit Fig. 2 beschrieben wurden, werden in Fig. 3 entsprechende Bezugszeichen verwendet. In der Seitenansicht ist die Lagerung des Amboss 21 an den beiden vertikal verlaufenden Parallelfedern 25 besonders deutlich erkennbar. Bei der in Fig. 3 dargestellten und insoweit bevorzugten Ausgestaltung der Vorrichtung 16 verlaufen die Blattfedern 26A, 26B der Parallelfeder 25 in Hochrichtung Ys des Spaltes S und somit in vertikaler Richtung. Die Parallelfeder 25 ist mit ihrem oberen Ende an der Grundplatte 24 befestigt, während das untere Ende der Parallelfeder 25 ein freies Ende ist. Alternativ zu der in Fig. 3 dargestellten Ausgestaltung könnten die Blattfedern 26A, 26B der Parallelfeder 25 auch in Längsrichtung X_{S} des Spaltes S und somit in horizontaler Richtung verlaufen. Durch den parallelen Verlauf der Blattfedern 26A, 26B wird der Amboss 21 beim Einfedern und beim Ausfedern in Querrichtung Z_{S} des Spaltes S parallel verschoben, ohne dabei gekippt zu werden. Die Drehachse 21B des Amboss 21 soll also in jeder Stellung des Amboss 21 in Hochrichtung Y_{S} des Spaltes S und somit vertikal verlaufen. Bei einer - durch die Erfindung verhinderten - gekippten Stellung des Amboss 21 und/oder der Sonotrode 20 besteht der Nachteil, dass die Wirkbereiche 20A, 20B nur mit ihrer Kante auf die Flossennaht 15 einwirken, wodurch die Qualität der Verschweißung abnimmt oder sogar die Flossennaht 15 zerschnitten wird. Durch die Parallelfeder 25 wird hingegen eine "Parallelverschiebung" des Amboss 21 in Querrichtung Z_{S} des Spaltes S ermöglicht, was die zuvor beschriebenen Nachteile vermeidet.

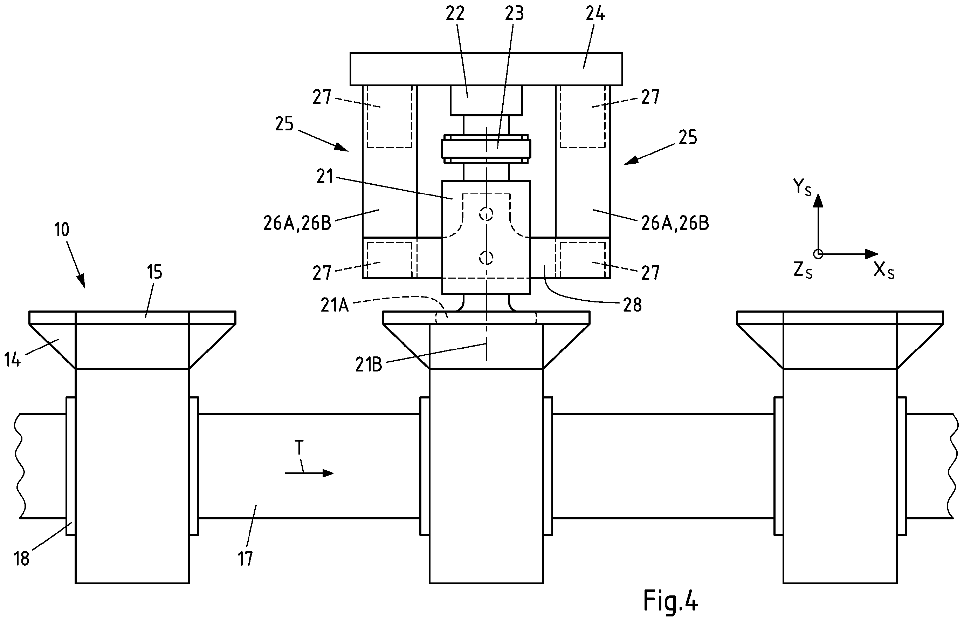

Fig. 4 zeigt die Vorrichtung 16 aus Fig. 2 in einer Vorderansicht entlang der Schnittebene IV-IV aus Fig. 3. Für diejenigen Bereiche der Vorrichtung 16, die bereits im Zusammenhang mit Fig. 2 oder Fig. 3 beschrieben wurden, werden in Fig. 4 entsprechende Bezugszeichen verwendet. Aus Gründen der besseren Übersichtlichkeit wurde die Schnittebene IV-IV derart gewählt, dass die Sonotrode 20 in Fig. 4 nicht sichtbar ist. In der Vorderansicht ist deutlich erkennbar, dass der Amboss 21 mittig zwischen beiden vertikal verlaufenden Parallelfedern 25 an der Brücke 28 gelagert ist. Hierzu können Verbindungselemente 29, beispielsweise Schrauben, vorgesehen sein. Durch die Brücke 28 werden die Kräfte bei Einfedern und Ausfedern von dem Amboss 21 gleichmäßig auf beide Parallelfedern 25 übertragen. Dies hat den Vorteil, dass die Blattfedern 26A, 26B der beiden Parallelfedern 25 nur einer Biegebelastung und keiner Torsionsbelastung ausgesetzt sind. Auch dies sorgt für eine "Parallelverschiebung" des Amboss 21 und verhindert, dass der Amboss 21 eine gekippte Stellung einnimmt. Die Drehachse 21B des Amboss 21 soll also in jeder Stellung in Hochrichtung Y_{S} des Spaltes S und somit vertikal verlaufen.

### Bezugszeichenliste:

- 1:: Zuschnitt
- 2:: Faltlinie
- 3, 4:: Seitenflächen
- 5:: vordere Fläche
- 5':: Endbereich (der vorderen Fläche 5)
- 6:: hintere Fläche
- 7:: Siegelfläche
- 7': Endbereich (der Siegelfläche 7)
- 8:: Bodenfläche
- 9:: Giebelfläche
- 10:: Packungsmantel
- 11:: Längsnaht
- 12:: Rechtecksfläche
- 13:: Dreiecksfläche
- 14:: Ohr
- 15:: Flossennaht
- 16:: Vorrichtung zur Ultraschallverschweißung
- 17:: Transportband
- 18:: Zelle
- 19:: Werkzeug
- 20:: Sonotrode / Rollsonotrode
- 20A:: Wirkbereich (der Sonotrode 20)
- 20B:: Drehachse (der Sonotrode 20)
- 21:: Amboss / Rollamboss
- 21A:: Wirkbereich (des Amboss 21)
- 21B:: Drehachse (des Amboss 21)
- 22:: Antrieb (des Amboss 21)
- 23:: Riemen
- 24:: Grundplatte
- 25:: Parallelfeder
- 26A, 26B:: Blattfeder
- 27:: Distanzelement
- 28:: Brücke
- 29:: Verbindungselemente

- D₁: Dicke (der Flossennaht 15)
- D₂:: vergrößerte Dicke (der Flossennaht 15)
- S:: Spalt
- T:: Transportrichtung (der Packungsmäntel 10)
- X_{S}:: Längsrichtung (des Spaltes S)
- Y_{S}:: Hochrichtung (des Spaltes S)
- Z_{S}:: Querrichtung (des Spaltes S)

## Patentansprüche

1. Vorrichtung (16) zur Bearbeitung, insbesondere zur Ultraschallverschweißung, von Packungsmänteln (10) und/oder Verpackungen, umfassend:
- wenigstens zwei Werkzeuge (19, 20, 21) zur Bearbeitung, insbesondere zur Ultraschallverschweißung von Packungsmänteln (10),
- wenigstens eine Parallelfeder (25), an der wenigstens eines der Werkzeuge (19, 20, 21) quer zur Transportrichtung (T) der Packungsmäntel (10) beweglich gelagert ist, und
- eine Transporteinrichtung mit Zellen (18) zur Aufnahme der Packungsmäntel (10),
- wobei jedes Werkzeug (19, 20, 21) einen Wirkbereich (20A, 21A) aufweist,
- wobei die Werkzeuge (19, 20, 21) derart gelagert sind, dass zwischen den Wirkbereichen (20A, 21A) ein Spalt (S) entsteht, dessen Längsrichtung (X_{S}) der Transportrichtung (T) der Packungsmäntel (10) entspricht,
- wobei die Werkzeuge (19, 20, 21) derart gelagert sind, dass die Größe des Spaltes (S) veränderbar ist,
- wobei eines der Werkzeuge eine Sonotrode (20) ist,
- wobei eines der Werkzeuge ein Amboss (21) ist, und
- wobei die Sonotrode (20) und der Amboss (21) Drehachsen (20B, 21B) aufweisen, die parallel zueinander angeordnet sind,
**dadurch gekennzeichnet, dass**
die Parallelfeder (25) wenigstens zwei parallel zueinander angeordnete Blattfedern (26A, 26B) umfasst.

2. Vorrichtung nach Anspruch 1,
**dadurch gekennzeichnet, dass**
die Blattfedern (26A, 26B) der Parallelfeder (25) durch wenigstens zwei Distanzelemente (27) voneinander beabstandet sind.

3. Vorrichtung nach Anspruch 1 oder 2,
**dadurch gekennzeichnet, dass**
die Parallelfeder (25) in Querrichtung (Z_{S}) des Spaltes (S) eine Steifigkeit im Bereich zwischen 0,5 N/mm und 350 N/mm, insbesondere zwischen 4,0 N/mm und 100 N/mm, ganz insbesondere zwischen 5,0 N/mm und 45 N/mm aufweist.

4. Vorrichtung nach einem der Ansprüche 1 bis 3,
**dadurch gekennzeichnet, dass**
wenigstens eines der Werkzeuge (19, 20, 21) an zwei oder mehr Parallelfedern (25) gelagert ist.

5. Vorrichtung nach Anspruch 4,
**dadurch gekennzeichnet, dass**
die Parallelfedern (25) durch eine Brücke (28) miteinander verbunden sind.

6. Vorrichtung nach einem der Ansprüche 1 bis 5,
**dadurch gekennzeichnet, dass**
die Parallelfedern (25) in Hochrichtung (Y_{S}) des Spaltes (S) verlaufen.

7. Vorrichtung nach einem der Ansprüche 1 bis 5,
**dadurch gekennzeichnet, dass**
die Parallelfedern (25) in Längsrichtung (X_{S}) des Spaltes (S) verlaufen.

8. Vorrichtung nach Anspruch 1,
**dadurch gekennzeichnet, dass**
die Sonotrode (20) an der Parallelfeder (25) gelagert ist.

9. Vorrichtung nach Anspruch 1,
**dadurch gekennzeichnet, dass**
der Amboss (21) an der Parallelfeder (25) gelagert ist.

10. Verwendung einer Vorrichtung (16) nach einem der Ansprüche 1 bis 9 zur Bearbeitung, insbesondere zur Verschweißung, von Packungsmänteln und/oder Verpackungen für Nahrungsmittel.

## Claims

1. Device (16) for processing, in particular for ultrasonic welding, of packaging sleeves (10) and/or packaging, comprising:
- at least two tools (19, 20, 21) for processing, in particular for ultrasonic welding of packaging sleeves (10),
- at least one parallel spring (25) on which at least one of the tools (19, 20, 21) is mounted to be moveable transversely to the transport direction (T) of the packaging casing (10), and
- a transport device having cells (18) for receiving the packaging sleeves (10),
- wherein each tool (19, 20, 21) has an operating area (20A, 21A),
- wherein the tools (19, 20, 21) are mounted in such a way that a gap (S) occurs between the operating areas (20A, 21A), the longitudinal direction (Xₛ) of which gap corresponds to the transport direction (T) of the packaging casings (10),
- wherein the tools (19, 20, 21) are mounted in such a way that the size of the gap (S) can be changed,
- wherein one of the tools is a sonotrode (20),
- wherein one of the tools is an anvil (21), and
- wherein the sonotrode (20) and the anvil (21) have rotational axes (20B, 21B) which are arranged in parallel to each other,
**characterised in that**
the parallel spring (25) comprises at least two leaf springs (26A, 26B) arranged in parallel to each other.

2. Device according to claim 1,
**characterised in that**
the leaf springs (26A, 26B) of the parallel spring (25) are spaced apart from one another by at least two spacer elements (27).

3. Device according to claim 1 or 2,
**characterised in that**
the parallel spring (25) has, in the transverse direction (Zₛ) of the gap (S), a rigidity ranging between 0.5N/mm and 350N/mm, in particular between 4.0N/mm and 100N/mm, more particularly between 5.0N/mm and 45N/mm.

4. Device according to one of claims 1 to 3,
**characterised in that**
at least one of the tools (19, 20, 21) is mounted on two or more parallel springs (25).

5. Device according to claim 4,
**characterised in that**
the parallel springs (25) are connected to one another by a bridge (28).

6. Device according to one of claims 1 to 5,
**characterised in that**
the parallel springs (25) run in the vertical direction (Yₛ) of the gap (S).

7. Device according to one of claims 1 to 5,
**characterised in that**
the parallel springs (25) run in the longitudinal direction (Xₛ) of the gap (S).

8. Device according to claim 1,
**characterised in that**
the sonotrode (20) is mounted on the parallel spring (25).

9. Device according to claim 1,
**characterised in that**
the anvil (21) is mounted on the parallel spring (25).

10. Use of a device (16) according to one of claims 1 to 9 for processing, in particular for welding, of packaging sleeves and/or packaging for food products.

## Revendications

1. Appareil (16) pour le traitement, en particulier la soudure aux ultrasons, d'enveloppes d'emballage (10) et/ou de conditionnements, comprenant :
- au moins deux outils (19, 20, 21) pour le traitement, en particulier pour la soudure aux ultrasons, d'enveloppes d'emballage (10),
- au moins un ressort parallèle (25), sur lequel au moins un des outils (19, 20, 21) est disposé de manière mobile transversalement à la direction de transport (T) de l'enveloppe d'emballage (10), et
- un dispositif de transport doté de cellules (18) destinées à recevoir les enveloppes d'emballage (10),
- chaque outil (19, 20, 21) comportant une zone efficace (20A, 21A),
- les outils (19, 20, 21) étant disposés de telle sorte qu'une fente (S) est créée entre les zones efficaces (20A, 21A), dont la direction longitudinale (X_{S}) correspond à la direction de transport (T) de l'enveloppe d'emballage (10),
- les outils (19, 20, 21) étant disposés de telle sorte que la taille de la fente (S) est variable,
- l'un des outils étant une sonotrode (20),
- l'un des outils étant une enclume (21), et
- la sonotrode (20) et l'enclume (21) possédant des axes de rotation (20B, 21B) qui sont arrangés parallèlement l'un à l'autre,
**caractérisé en ce que**
le ressort parallèle (25) comprend au moins deux ressorts à lame (26A, 26B) agencés parallèlement l'un à l'autre.

2. Appareil selon la revendication 1,
**caractérisé en ce que**
les ressorts à lame (26A, 26B) du ressort parallèle (25) sont écartés l'un de l'autre par au moins deux éléments espaceurs (27).

3. Appareil selon la revendication 1 ou 2,
**caractérisé en ce que**
le ressort parallèle (25) possède dans la direction transversale (Z_{S}) de la fente (S) une rigidité dans un intervalle entre 0,5 N/mm et 350 N/mm, en particulier entre 4,0 N/mm et 100 N/mm, tout particulièrement entre 5,0 N/mm et 45 N/mm.

4. Appareil selon l'une des revendications 1 à 3,
**caractérisé en ce**
**qu'**au moins un des outils (19, 20, 21) est disposé sur deux ou plus ressorts parallèles (25).

5. Appareil selon la revendication 4,
**caractérisé en ce que**
les ressorts parallèles (25) sont reliés l'un à l'autre par un pont (28).

6. Appareil selon l'une des revendications 1 à 5,
**caractérisé en ce que**
les ressorts parallèles (25) sont orientés dans la direction verticale (Y_{S}) de la fente (S).

7. Appareil selon l'une des revendications 1 à 5,
**caractérisé en ce que**
les ressorts parallèles (25) sont orientés dans la direction longitudinale (X_{S}) de la fente (S).

8. Appareil selon la revendication 1,
**caractérisé en ce que**
la sonotrode (20) est disposée sur le ressort parallèle (25).

9. Appareil selon la revendication 1,
**caractérisé en ce que**
l'enclume (21) est disposée sur le ressort parallèle (25).

10. Utilisation d'un appareil (16) selon l'une des revendications 1 à 9 pour le traitement, en particulier pour la soudure, d'enveloppes d'emballage et/ou de conditionnements pour des produits alimentaires.
